# EUROPEAN PATENT SPECIFICATION

(11) **EP 3 916 234 B1**
(45) Date of publication and mention of the grant of the patent: **23.10.2024**
(21) Application number: 21175576.4
(22) Date of filing: 25.05.2021
(51) Int. Cl.: F04D 13/06, F04D 29/42, F04D 29/62, H02K 5/22, H01R 13/74

(54) **OUTGOING LINE ADAPTER MODULE FOR PUMP**
AUSGANGSLEITUNGSADAPTERMODUL FÜR PUMPE
MODULE ADAPTATEUR DE LIGNE SORTANTE POUR POMPE

(30) Priority: 28.05.2020 CN 202010468039
(43) Date of publication of application: 01.12.2021
(73) Proprietor: Hefei Xinhu Canned Motor Pump Co., Ltd., Anhui Province 230088 (CN)
(72) Inventor: WANG, Guoliang, HEFEI CITY, 230088 (CN); DING, Junfeng, HEFEI CITY, 230088 (CN); HU, Qiyong, HEFEI CITY, 230088 (CN); WANG, Yukuan, HEFEI CITY, 230088 (CN); HU, Zhi, HEFEI CITY, 230088 (CN); ZHANG, Li, HEFEI CITY, 230088 (CN); LI, Youyuan, HEFEI CITY, 230088 (CN); WANG, Jinchao, HEFEI CITY, 230088 (CN); WANG, Yong, HEFEI CITY, 230088 (CN); WANG, Yuan, HEFEI CITY, 230088 (CN)
(74) Representative: Flach Bauer & Partner Patentanwälte mbB

(56) References cited:
- EP-A1- 3 034 879
- WO-A1-2019/064767
- CN-A- 108 331 765
- DE-U1- 202019 005 305
- JP-A- 2014 061 782
- JP-A- 2014 143 899
- US-A1- 2004 160 142
- US-A1- 2014 079 578
- US-A1- 2016 190 728
- US-A1- 2017 305 457

## Description

### TECHNICAL FIELD

The present invention relates to the field of pump technologies, and more particularly, to an outgoing line adapter module for a pump.

### BACKGROUND

A pump is a machine that conveys fluid or pressurizes the fluid. Generally, a drive motor is arranged in the pump, and the drive motor is provided with a control box configured to control operation of the drive motor. Generally, the control box also needs to be provided with an outgoing line adapter interface configured to connect a signal line or a power line extracted from a client. The client is configured to transmit a control signal or supply power to the control box to control operation of the drive motor.

In an installation process of an existing pump and a client, a plurality of pins corresponding to the signal line and the power line need to be together inserted into corresponding ports provided on the control box.

Generally, a working environment of the pump is relatively narrow, but an interface size of an existing outgoing line adapter is larger, and thus too much space needs to be taken up. Therefore, in the case of a large number and a large variety of interfaces, difficulty of installation is increased, and it is prone to a problem of pump operation faults caused by insertion of the pins into non-corresponding interfaces, causing the pump cannot adapt to a use environment with strict requirements for space, and further, causing an inefficient mass production of the pump.

EP3034879A1 describes a pump component with a motor disposed in a stator shell, wherein the stator shell is provided with a terminal box on an axial end side.

CN 108 331 765 A, JP 2014 143899 A and US 2004/160142 A1 disclose an outgoing line adapter module applied in a pump.

### SUMMARY

An objective of the present invention is to provide an outgoing line adapter module for a pump to improve convenience and accuracy in installation of a wiring plug and to improve adaptability to narrow space.

To achieve the above objective, an outgoing line adapter module according to claim 1 is provided.

An outgoing line adapter module for a pump is provided, and the module includes:
a first connecting part and a second connecting part arranged at intervals.

The first connecting part is detachably installed on an edge of an end part, axially away from a pump body, of a housing of the pump, and the second connecting part is formed in a way that the first connecting part extends outwards in a radial direction of the housing.

The second connecting part is provided with an integrally-formed adapter member, an end of the adapter member is configured to connect a wiring plug, and another end of the adapter member is configured to connect an electrical contact point on a control module of the pump.

Further, the first connecting part is provided with a limit member matching with a boss on the housing, the limit member is configured to limit an installation position of the first connecting part on the housing, and the limit member is a recessed part on the first connecting part.

Further, the first connecting part is provided with a screw hole, and the first connecting part is installed on the housing by screwing a bolt in the screw hole.

Further, the first connecting part is provided with an integrally-formed earth pin, an earth terminal of the earth pin is fixed to the housing by the bolt, and another terminal of the earth pin is connected to the control module.

Further, the control module is arranged in a control box, and an aperture is provided on a side of the control box close to the adapter member. The second connecting part is inserted in the aperture, such that the adapter member is electrically connected to the electrical contact point on the control module.

Further, the outgoing line adapter module also includes a sealing member configured to seal a gap between the control box and the outgoing line adapter module.

Further, the adapter member includes a power pin and a signal pin.

Further, the adapter member includes a power pin, the second connecting part is provided with a through hole, and a signal line is connected to the corresponding electrical contact point on the control module through the through hole.

Further, the first connecting part and the second connecting part are integrally formed, and a reinforcing member is provided between the first connecting part and the second connecting part.

Compared with the existing technologies, the present invention has following beneficial effects.
1. The adapter module is small in size, such that installation of the adapter module can be achieved by reasonably utilizing limited space of the pump, it is more convenient to insert the wiring plug into the adapter member, and thus environmental adaptability of the pump is improved.
2. A mode of connection between the adapter member and the control module is simplified, and reliability and accuracy of connection between the adapter member and the control module is improved.
3. Installation of the adapter module is simple, and efficiency of mass production of the adapter module is increased.

### BRIEF DESCRIPTION OF THE DRAWINGS

FIG. 1 is a schematic structural diagram of an integral pump according to an embodiment of the present invention;
FIG. 2 is a schematic structural diagram of a pump equipped with an outgoing line adapter module according to an embodiment of the present invention;
FIG. 3 is a schematic structural diagram showing a cross section of the pump according to an embodiment of the present invention;
FIG. 4 is a schematic structural diagram of an outgoing line adapter module according to an embodiment of the present invention;
FIG. 5 is a schematic structural diagram of another outgoing line adapter module according to an embodiment of the present invention; and
FIG. 6 is a schematic diagram of the outgoing line adapter module as shown in FIG. 4 according to an embodiment of the present invention.

In the drawings:
control box 100, box body 110, box cover 120, aperture 130, control module 140;
pump 200, pump body 210, housing 220, boss 221;
outgoing line adapter module 300, first connecting part 310, recessed part 311, earth pin 312, second connecting part 320, adapter member 321, power pin 3211, through hole 3212, signal pin 3213, sealing member 322, mating hole 323, latch 324;
empty space 400;
wiring plug 500;
reinforcing rib 600; and
bolt 700; and screw hole 800.

### DETAILED DESCRIPTION

The following embodiments are intended to describe the present invention but are not intended to limit the scope of the present invention which is solely defined by the claims.

### Embodiments

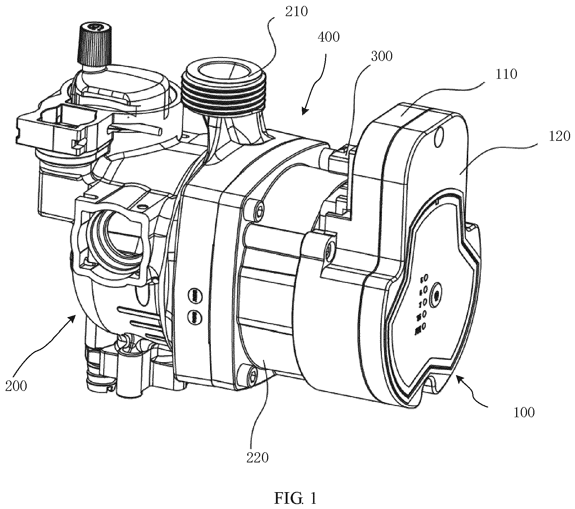

FIG. 1 is a schematic structural diagram of an integral pump according to an embodiment of the present invention; A pump 200 is a machine that conveys fluid or pressurizes the fluid. As shown in FIG. 1, generally, the pump 200 includes a pump body 210 and a drive motor (not shown in the figure), and the drive motor (not shown in the figure) may be installed in a housing 220. In addition, the drive motor (not shown in the figure) is provided with a control box 100 configured to control operation of the drive motor (not shown in the figure). The control box 100 includes a box body 110 and a box cover 120, wherein the box cover 120 is covered on the box body 110. Further, the control box 100 may be integrally installed on the housing 220. Generally, the control box 100 also needs to be provided with an outgoing line adapter interface configured to connect a signal line or a power line extracted from a client. The client is configured to transmit a control signal or supply power to the control box 100 to control operation of the drive motor. An outgoing line adapter module 300 provided by this embodiment may be suitable for optimizing outgoing line adapter control of the control box 100.

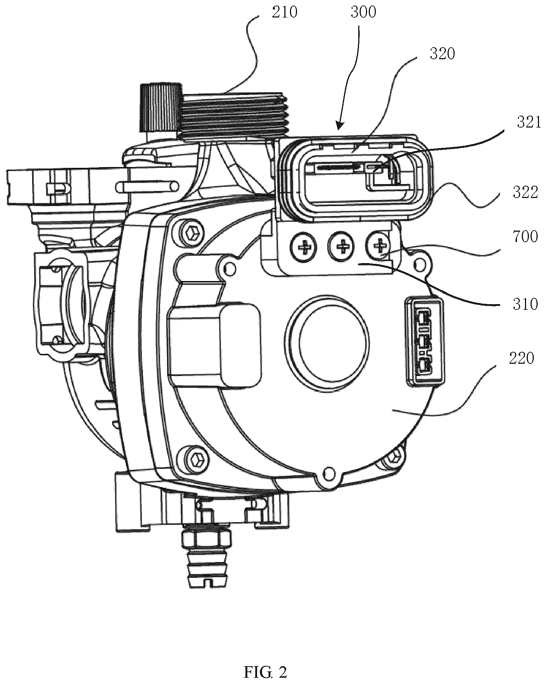

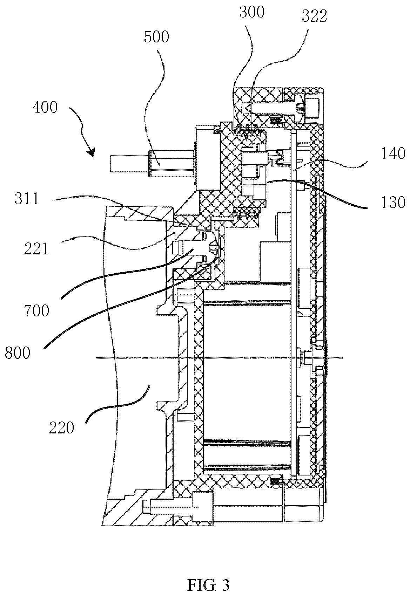

FIG. 2 is a schematic structural diagram of a pump equipped with the outgoing line adapter module according to an embodiment of the present invention. FIG. 3 is a schematic structural diagram showing a cross section of the pump according to an embodiment of the present invention. With reference to FIG. 1 to FIG. 3, the outgoing line adapter module 300 includes a first connecting part 310 and a second connecting part 320 arranged at intervals.

The first connecting part 310 is detachably installed on an edge of an end part, axially away from the pump body 210, of the housing 220 of the pump 200, and the second connecting part 320 is formed in a way that the first connecting part 310 extends outwards in a radial direction of the housing 220, such that an empty space 400 is formed between the second connecting part 320 and the pump body 210.

The second connecting part 320 is provided with an integrally-formed adapter member 321, wherein one end of the adapter member 321 is configured to connect a wiring plug 500, and the other end of the adapter member 321 is configured to connect an electrical contact point on a control module 140 of the pump 200. Specifically, the adapter member 321 is arranged in correspondence with the electrical contact point on the control module 140, and the control module 140 is configured to control the drive motor (not shown in the figure). In one embodiment, the adapter member 321 is configured to be inserted by the wiring plug 500, such that the wiring plug 500 is electrically connected to the electrical contact point. Moreover, the inserted wiring plug 500 is located in the empty space 400 between the second connecting part 320 and the pump body 210, which makes full use of space. The control module 140 may be a circuit board provided with the electrical contact point. The electrical contact point may be a conductive elastic piece arranged on the circuit board, and the wiring plug 500 may be point-connected to the elastic piece through the adapter member 321 on the outgoing line adapter module 300.

The first connecting part 310 and the second connecting part 320 are arranged at intervals, and the first connecting part 310 and the second connecting part 320 are alternately connected to each other, such that the second connecting part 320 is far away from the pump body 210 to increase the empty space 400 between the second connecting part 320 and the pump body 210, making it convenient for plugging and unplugging the wiring plug 500.

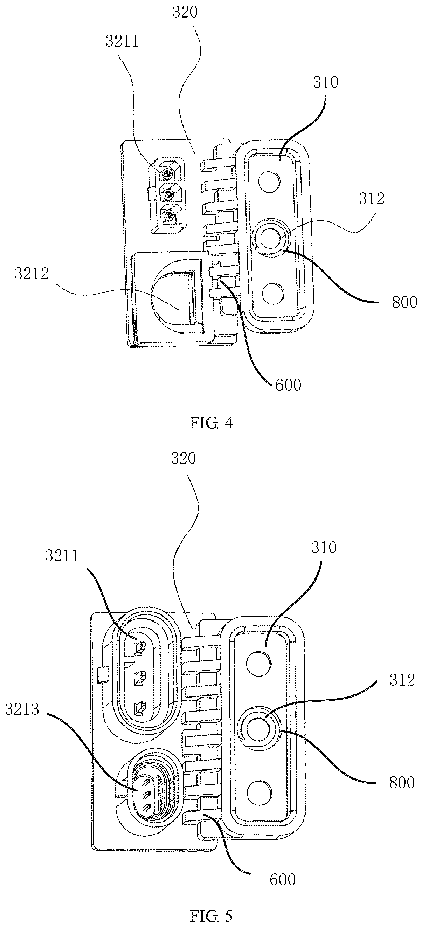

Further, the first connecting part 310 and the second connecting part 320 are integrally formed, and a reinforcing member is arranged between the first connecting part 310 and the second connecting part 320 to increase stability of connection between the first connecting part 310 and the second connecting part 320. Alternatively, the reinforcing member may be a reinforcing rib 600 as shown in FIG. 4 to FIG. 5.

Still further, the adapter member 321 on the second connecting part 320 may be integrally formed by injection moulding and may be arranged in correspondence with the electrical contact point on the control module 140, such that the adapter member 321 may be directly inserted into the control module 140 for installation without artificially determining accuracy of correspondence between the adapter member 321 and the electrical contact point. Therefore, the installation process is simplified, and the accuracy is improved.

It is to be noted that the first connecting part 310, the second connecting part 320, and the adapter member 321 on the second connecting part 320 may all be integrally formed by injection moulding, which simplifies the production process and facilitates mass production.

According to the technical solution of this embodiment, in one aspect, the second connecting part 320 is provided with the integrally-formed adapter member 321 arranged in correspondence with the electrical contact point on the control module 140, and the adapter member 321 is configured to connect the wiring plug 500. Therefore, a mode connection between the adapter member 321 and the control module 140 can be improved, and accuracy of the connection between the adapter member 321 and the electrical contact point can be improved. In another aspect, in the outgoing line adapter module 300, the second connecting part 320 is formed in a way that the first connecting part 310 extends outwards in the radial direction of the housing 220, such that the empty space 400 between the second connecting part 320 and the pump body 210 may be fully utilized to house the adapter member 321, making it convenient for insertion of the wiring plug 500 into the adapter member 321. Therefore, adaptability to a use environment with strict requirements for space is improved.

On the basis of the above technical solution, the first connecting part 310 may be provided with a limit member matching with the housing 220. The limit member is configured to limit an installation position of the first connecting part 310 on the housing 220, such that the outgoing line adapter module 300 can be conveniently, quickly and accurately installed on the housing 220.

This embodiment does not limit a specific structure of the limit member, and this embodiment will be described by way of examples.

In one embodiment, with reference to FIG. 3, the limit member is a recessed part 311 on the first connecting part 310, and the recessed part 311 is matched with a boss 221 on the housing 220.

Further, with reference to FIG. 3 to FIG. 5, the first connecting part 310 is provided with a screw hole 800, and the first connecting part 310 is installed on the housing 220 by screwing a bolt 700 in the screw hole 800.

Further, the first connecting part 310 is provided with an integrally-formed earth pin 312, wherein an earth terminal of the earth pin 312 is fixed to the housing 220 by the bolt 700, and another terminal of the earth pin 312 is connected to the control module 140.

With reference to FIG. 3 to FIG. 5, the screw hole 800 may be provided in the recessed part 311 on the first connecting part 310, such that the recessed part 311 of the first connecting part 310 can at least implement following functions.
1. Position limiting: a joint between the first connecting part 310 and the housing 220 is matched with the recessed part 311 and the boss 221 to achieve the function of position limiting.
2. Fixation: the bolt 700 is screwed into the screw hole 800 provided in the recessed part 311 for fixation.
3. The earth pin 312 is connected to the housing 220 by the bolt 700 of the recessed part 311 to achieve earth connection.
4. Stability: the joint between the first connecting part 310 and the housing 220 is matched with the recessed part 311 and the boss 221, which can increase a force bearing area and a force bearing direction, and thus can increase the stability of the joint.
5. Space saving: the blot 700 is screwed into the recessed part 311, which is advantageous to saving space.

On the basis of the above technical solution, with reference to FIG. 1 to FIG. 3, an end of the adapter member 321 facing the pump body 210 is configured to connect the wiring plug 500, and another end of the adapter member 321 facing away from the pump body 210 is configured to connect the electrical contact point on the control module 140.

In a specific embodiment, with reference to FIG. 3, the control module 140 is arranged in the control box 100, and an aperture 130 is provided on a side of the control box 100 close to the adapter member 321. When the control box 100 is installed at an axial end part of the housing 220, the second connecting part 320 of the outgoing line adapter module 300 is inserted in the aperture 130 of the control box 100, such that the adapter member 321 on the second connecting part 320 is electrically connected to the electrical contact point on the control module 140.

Further, the outgoing line adapter module 300 also includes a sealing member 322 configured to seal a gap between the control box 100 and the outgoing line adapter module 300. Alternatively, the sealing member 322 may be a rubber sleeve.

On the basis of the above technical solution, the adapter member 321 may include a pin, and a through hole, etc.

### 1. Pin

According to different functions, the pin may include a power pin and a signal pin. An end of the pin facing the pump body 210 is configured to insert the wiring plug 500, and another end of the pin facing away from the pump body 210 is configured to connect the electrical contact point on the control module 140. For example, the power pin is configured to connect a power plug of a power line, and the signal pin is configured to connect the wiring plug 500 of the signal line.

### 2. Through hole

The wiring plug 500 also may be connected to the corresponding electrical contact point on the control module 140 through the through hole. The through hole may be configured for positioning and fixing the wiring plug 500.

Further, FIG. 4 is a schematic structural diagram of an outgoing line adapter module according to an embodiment of the present invention; and FIG. 5 is a schematic structural diagram of another outgoing line adapter module according to an embodiment of the present invention. With reference to FIG. 4 to FIG. 5, the adapter member 321 in the outgoing line adapter module 300 is a pin or a through hole 3212, which may be correspondingly arranged according to different functions of the wiring plug 500.

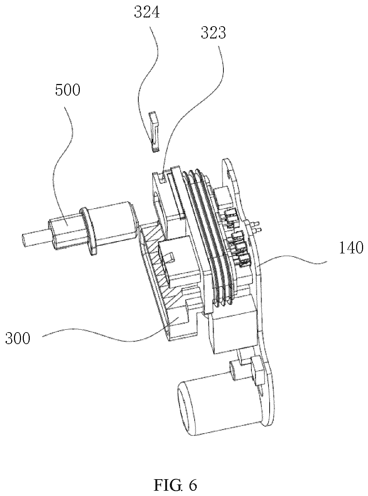

In one embodiment, the outgoing line adapter module 300 as shown in FIG. 4 may be taken as an example for illustration. FIG. 6 is a schematic diagram of the outgoing line adapter module 300 as shown in FIG. 4 according to an embodiment of the present invention.

With reference to FIG. 6, the adapter member 321 includes a power pin 3211 and a through hole 3212, wherein one end of the power pin 3211 is connected to the power line extracted from the client, and the other end of the power pin 3211 is connected to the electrical contact point corresponding to a power source on the control module 140. The second connecting part 320 is provided with the through hole 3212, and a signal line (the wiring plug 500 is a signal wire) may pass through the through hole 3212 to connect the corresponding electrical contact point on the control module 140. Further, a side of the through hole 3212 facing the pump body 210 may also be provided with a mating hole 323 for insertion of the pin 324 to fix the signal line inserted into the through hole 3212.

In another embodiment, the outgoing line adapter module 300 as shown in FIG. 4 may be taken as an example for illustration. With reference to FIG. 5, the adapter member 321 is in the form of pins, including the power pin 3211 and the signal pin 3213.

## Claims

1. An outgoing line adapter module for a pump comprising a pump body (210), a pump housing (220) and a control box (100) which are arranged in an axial direction, wherein a control module (140) is arranged in the control box (100), the outgoing line adapter module comprising:
a first connecting part (310) and a second connecting part (320),
wherein the first connecting part (310) and the second connecting part (320) are connected to each other and wherein the second connecting part (320) is provided with an integrally-formed adapter member;
wherein the first connecting part (310) is configured to be detachably installed on an edge of an end part of the housing (220) of the pump (200), said end part being the end part axially away from the pump body (210);
wherein, when the outgoing line adapter module is installed on the edge of the end part of the pump housing (220), the second connecting part (320) extends outward from the pump housing (220) in a radial direction, an end of the adapter member (321) axially faces a part of the pump body (210) and is configured for axially plugging and unplugging a wiring plug for electrically connecting the pump, and an axially opposite end of the adapter member (321) faces away from the pump body (210) and is configured to connect an electrical contact point on the control module of the pump, as a result, an axially extending empty space (400) for accommodating the wiring plug is formed between the second connecting part (320) and said part of the pump body (210);
**characterized in that** the first connecting part (310) and the second connecting part (320) are connected to each other in such a way that, when the outgoing line adapter module is installed on the edge of the end
part of the pump housing (220), the second connecting part (320) is located axially further away from said part of the pump body (220) than the first connecting part (310), as a result, the empty space (400) is increased making it convenient for plugging and unplugging the wiring plug (500).

2. The outgoing line adapter module for a pump according to claim 1, wherein the first connecting part (310) is provided with a limit member matching with a boss (221) on the housing (220), the limit member is configured to limit an installation position of the first connecting part (310) on the housing (220), and the limit member is a recessed part (311) on the first connecting part (310).

3. The outgoing line adapter module for a pump according to claim 1 or 2, wherein the first connecting part (310) is provided with a screw hole (800), and the first connecting part (310) is configured to be installed on the housing (220) by screwing a bolt (700) in the screw hole (800).

4. The outgoing line adapter module for a pump according to claim 3, wherein the first connecting part (310) is provided with an integrally-formed earth pin (312), an earth terminal of the earth pin (312) is configured to be fixed to the housing (220) by the bolt (700), and another terminal of the earth pin (312) is configured to be connected to the control module (140).

5. The outgoing line adapter module for a pump according to any one of claims 1 to 4, wherein the second connecting part (320) is configured to be inserted in an aperture (130) which is provided on a side of the control box (100) close to the adapter member (321), wherein the control module (140) is arranged in the control box (100), such that the adapter member (321) is electrically connected to the electrical contact point on the control module (140).

6. The outgoing line adapter module for a pump according to claim 5, further comprising a sealing member (322) configured to seal a gap between the control box (100) and the outgoing line adapter module.

7. The outgoing line adapter module for a pump according to any one of claims 1 to 6, wherein the adapter member (321) comprises a power pin (3211) and a signal pin (3213).

8. The outgoing line adapter module for a pump according to claim 7, wherein the adapter member (321) comprises the power pin (3211), the second connecting part (320) is provided with a through hole (3212), and a signal line is configured to be connected to the corresponding electrical contact point on the control module (140) through the through hole (3212).

9. The outgoing line adapter module for a pump according to any one of claims 1 to 8, wherein the first connecting part (310) and the second connecting part (320) are integrally formed, and a reinforcing member is provided between the first connecting part (310) and the second connecting part (320).

## Patentansprüche

1. Abgangsleitungsadaptermodul für eine Pumpe, umfassend einen Pumpenkörper (210), ein Pumpengehäuse (220) und einen Steuerkasten (100), die in einer axialen Richtung angeordnet sind, wobei ein Steuermodul (140) in dem Steuerkasten (100) angeordnet ist, wobei das Abgangsleitungsadaptermodul umfasst:
ein erstes Verbindungsteil (310) und ein zweites Verbindungsteil (320),
wobei das erste Verbindungsteil (310) und das zweite Verbindungsteil (320) miteinander verbunden sind und wobei das zweite Verbindungsteil (320) mit einem einstückig ausgebildeten Adapterelement versehen ist;
wobei das erste Verbindungsteil (310) dazu konfiguriert ist, abnehmbar an einem Rand eines Endteils des Gehäuses (220) der Pumpe (200) installiert zu werden, wobei das Endteil das axial von dem Pumpenkörper (210) entfernte Endteil ist; und
wobei, wenn das Abgangsleitungsadaptermodul an dem Rand des Endteils des Pumpengehäuses (220) installiert ist, sich das zweite Verbindungsteil (320) von dem Pumpengehäuse (220) in einer radialen Richtung nach außen erstreckt, ein Ende des Adapterelements (321) axial einem Teil des Pumpenkörpers (210) zugewandt ist und dazu konfiguriert ist, einen Verdrahtungsstecker zum elektrischen Verbinden der Pumpe axial zu stecken und zu lösen, und ein axial entgegengesetztes Ende des Adapterelements (321) von dem Pumpenkörper (210) abgewandt und dazu konfiguriert ist, eine elektrische Kontaktstelle mit dem Steuermodul der Pumpe zu verbinden, sodass sich ein axial erstreckender Leerraum (400) zum Aufnehmen der Verdrahtungsstecker zwischen dem zweiten Verbindungsteil (320) und dem Teil des Pumpenkörpers (210) ausgebildet ist;
**dadurch gekennzeichnet, dass** der erste Verbindungsteil (310) und der zweite Verbindungsteil (320) derart miteinander verbunden sind, dass, wenn das Abgangsleitungsadaptermodul an dem Rand des Endteils des Pumpengehäuses (220) installiert ist, sich das zweite Verbindungsteil (320) axial weiter entfernt von dem Teil des Pumpengehäuses (220) befindet als das erste Verbindungsteil (310), sodass der Leerraum (400) vergrößert wird, wodurch er zum Stecken und Lösen des Verdrahtungssteckers (500) geeignet wird.

2. Abgangsleitungsadaptermodul für eine Pumpe nach Anspruch 1, wobei das erste Verbindungsteil (310) mit einem Begrenzungselement versehen ist, das mit einem Vorsprung (221) an dem Gehäuse übereinstimmt, wobei das Begrenzungselement dazu konfiguriert ist, eine Installationsposition des ersten Verbindungsteils (310) an dem Gehäuse (220) zu begrenzen, und das Begrenzungselement ein vertieftes Teil (311) an dem ersten Verbindungsteil (310) ist.

3. Abgangsleitungsadaptermodul für eine Pumpe nach Anspruch 1 oder 2, wobei das erste Verbindungsteil (310) mit einem Schraubenloch (800) versehen ist und das erste Verbindungsteil (310) dazu konfiguriert ist, an dem Gehäuse (220) durch Einschrauben einer Schraube (700) in das Schraubenloch (800) installiert zu werden.

4. Abgangsleitungsadaptermodul für eine Pumpe nach Anspruch 3, wobei das erste Verbindungsteil (310) mit einem einstückig ausgebildeten Erdungsstift (312) versehen ist, wobei ein Erdungsanschluss des Erdungsstifts (312) dazu konfiguriert ist, durch die Schraube (700) an dem Gehäuse (220) befestigt zu werden, und ein anderer Anschluss des Erdungsstiftes (312) dazu konfiguriert ist, mit dem Steuermodul (140) verbunden zu werden.

5. Abgangsleitungsadaptermodul für eine Pumpe nach einem der Ansprüche 1 bis 4, wobei das zweite Verbindungsteil (320) dazu konfiguriert ist, in eine Öffnung (130) eingesetzt zu werden, die an einer Seite des Steuerkastens (100) nahe dem Adapterteil (321) bereitgestellt ist, wobei das Steuermodul (140) in dem Steuerkasten (100) angeordnet ist, sodass das Adapterelement (321) mit der elektrischen Kontaktstelle an dem Steuermodul (140) elektrisch verbunden ist.

6. Abgangsleitungsadaptermodul für eine Pumpe nach Anspruch 5, das ferner ein Dichtungselement (322) umfasst, das dazu konfiguriert ist, einen Spalt zwischen dem Steuerkasten (100) und dem Abgangsleitungsadaptermodul abzudichten.

7. Abgangsleitungsadaptermodul für eine Pumpe nach einem der Ansprüche 1 bis 6, wobei das Adapterelement (321) einen Leistungsstift (3211) und einen Signalstift (3213) umfasst.

8. Abgangsleitungsadaptermodul für eine Pumpe nach Anspruch 7, wobei das Adapterelement (321) den Leistungsstift (3211) umfasst, das zweite Verbindungsteil (320) mit einem Durchgangsloch (3212) versehen ist, und eine Signalleitung dazu konfiguriert ist, mit der entsprechenden elektrischen Kontaktstelle an dem Steuermodul (140) durch das Durchgangsloch (3212) verbunden zu werden.

9. Abgangsleitungsadaptermodul für eine Pumpe nach einem der Ansprüche 1 bis 8, wobei das erste Verbindungsteil (310) und das zweite Verbindungsteil (320) einstückig ausgebildet sind und ein Verstärkungselement zwischen dem ersten Verbindungsteil (310) und dem zweiten Verbindungsteil (320) bereitgestellt ist.

## Revendications

1. Module adaptateur de ligne sortante pour une pompe comprenant un corps de pompe (210), un carter de pompe (220) et une boîte de commande (100) qui sont agencés dans une direction axiale, dans lequel un module de commande (140) est agencé dans la boîte de commande (100), le module adaptateur de ligne sortante comprenant :
une première partie de connexion (310) et une seconde partie de connexion (320),
dans lequel la première partie de connexion (310) et la seconde partie de connexion (320) sont connectées l'une à l'autre et dans lequel la seconde partie de connexion (320) est pourvue d'un élément adaptateur formé de façon monobloc ;
dans lequel la première partie de connexion (310) est configurée pour être installée de façon détachable sur un bord d'une partie d'extrémité du carter (220) de la pompe (200), ladite partie d'extrémité étant la partie d'extrémité axialement éloignée du corps de pompe (210) ;
dans lequel, lorsque le module adaptateur de ligne sortante est installé sur le bord de la partie d'extrémité du carter de pompe (220), la seconde partie de connexion (320) s'étend vers l'extérieur depuis le carter de pompe (220) dans une direction radiale, une extrémité de l'élément adaptateur (321) fait axialement face à une partie du corps de pompe (210) et est configurée pour axialement brancher et débrancher une fiche de câblage pour connecter la pompe électriquement, et une extrémité axialement opposée de l'élément adaptateur (321) fait face à l'opposé du corps de pompe (210) et est configurée pour connecter un point de contact électrique sur le module de commande de la pompe, en conséquence, un espace vide (400), s'étendant axialement, pour loger la fiche de câblage est formé entre la seconde partie de connexion (320) et ladite partie du corps de pompe (210) ;
**caractérisé en ce que** la première partie de connexion (310) et la seconde partie de connexion (320) sont connectées l'une à l'autre de manière telle que, lorsque le module adaptateur de ligne sortante est installé sur le bord de la partie d'extrémité du carter de pompe (220), la seconde partie de connexion (320) est située de façon axialement plus éloignée de ladite partie du corps de pompe (220) que la première partie de connexion (310), en conséquence, l'espace vide (400) est augmenté permettant de faciliter le branchement et le débranchement de la fiche de câblage (500).

2. Module adaptateur de ligne sortante pour une pompe selon la revendication 1, dans lequel la première partie de connexion (310) est pourvue d'un élément de limite assorti à un bossage (221) sur le carter (220), l'élément de limite est configuré pour limiter une position d'installation de la première partie de connexion (310) sur le carter (220), et l'élément de limite est une partie évidée (311) sur la première partie de connexion (310).

3. Module adaptateur de ligne sortante pour une pompe selon la revendication 1 ou 2, dans lequel la première partie de connexion (310) est pourvue d'un trou de vis (800), et la première partie de connexion (310) est configurée pour être installée sur le carter (220) en vissant un boulon (700) dans le trou de vis (800).

4. Module adaptateur de ligne sortante pour une pompe selon la revendication 3, dans lequel la première partie de connexion (310) est pourvue d'une broche de terre (312), formée de façon monobloc, une borne de terre de la broche de terre (312) est configurée pour être fixée au carter (220) par le boulon (700), et une autre borne de la broche de terre (312) est configurée pour être connectée au module de commande (140).

5. Module adaptateur de ligne sortante pour une pompe selon l'une quelconque des revendications 1 à 4, dans lequel la seconde partie de connexion (320) est configurée pour être insérée dans une ouverture (130) qui est prévue sur un côté de la boîte de commande (100) près de l'élément adaptateur (321), dans lequel le module de commande (140) est agencé dans la boîte de commande (100), de manière telle que l'élément adaptateur (321) est électriquement connecté au point de contact électrique sur le module de commande (140).

6. Module adaptateur de ligne sortante pour une pompe selon la revendication 5, comprenant en outre un élément d'étanchéité (322) configuré pour effectuer l'étanchéité d'un écart entre la boîte de commande (100) et le module adaptateur de ligne sortante.

7. Module adaptateur de ligne sortante pour une pompe selon l'une quelconque des revendications 1 à 6, dans lequel l'élément adaptateur (321) comprend une broche électrique (3211) et une broche de signal (3213).

8. Module adaptateur de ligne sortante pour une pompe selon la revendication 7, dans lequel l'élément adaptateur (321) comprend la broche électrique (3211), la seconde partie de connexion (320) est pourvue d'un trou de passage (3212), et une ligne de signal est configurée pour être connectée au point de contact électrique correspondant sur le module de commande (140) à travers le trou de passage (3212).

9. Module adaptateur de ligne sortante pour une pompe selon l'une quelconque des revendications 1 à 8, dans lequel la première partie de connexion (310) et la seconde partie de connexion (320) sont formées de façon monobloc, et un élément de renfort est prévu entre la première partie de connexion (310) et la seconde partie de connexion (320).
